# EUROPEAN PATENT APPLICATION

(11) **EP 0 750 182 A2**
(43) Date of publication of application: **27.12.1996**
(21) Application number: 96110072.4
(22) Date of filing: 21.06.1996
(51) Int. Cl.: G01J 3/453

(54) **Fourier transform spectrometer**

(30) Priority: 21.06.1995 JP 154181/95
(71) Applicant: Yokogawa Electric Corporation, Tokyo 180 (JP)
(72) Inventor: Urabe, Syuichi, Akiruno-shi, Tokyo 197 (JP); Tanaami, Takeo, Tokyo 124 (JP)
(74) Representative: Henkel, Feiler, Hänzel & Partner

(57) **Abstract**

The present invention relates to a high signal-to-noise (S/N) ratio Fourier transform spectrometer by reducing A/D converter noise.

In a Fourier transform spectrometer which measures the interference light of a measured light and determines the spectra of the measured light through implementation of a Fourier transform on this measured result using a means of computation control, the present invention provides a light-receiving means; a low-gain channel and a high-gain channel, which convert to and retain as digital signals the output of this light-receiving means; and the above means of computation control (CPU) which determines the correlation equation between the low-gain and high-gain channels and substitutes the low-gain channel output converted using the above correlation equation for the saturated portion of the high-gain channel output.

## Description

### BACKGROUND OF THE INVENTION

### 1. Field of the Invention

The present invention is related to a Fourier transform spectrometer, particularly to a spectrometer in which A/D converter noise is reduced.

### 2. Description of the Prior Art

Fourier transform spectrometers measure the interference light of a measured light by scanning an interferometer and determine the spectra of the measured light by implementing a Fourier transform on this measured result using a means of computation control, such as a computer.

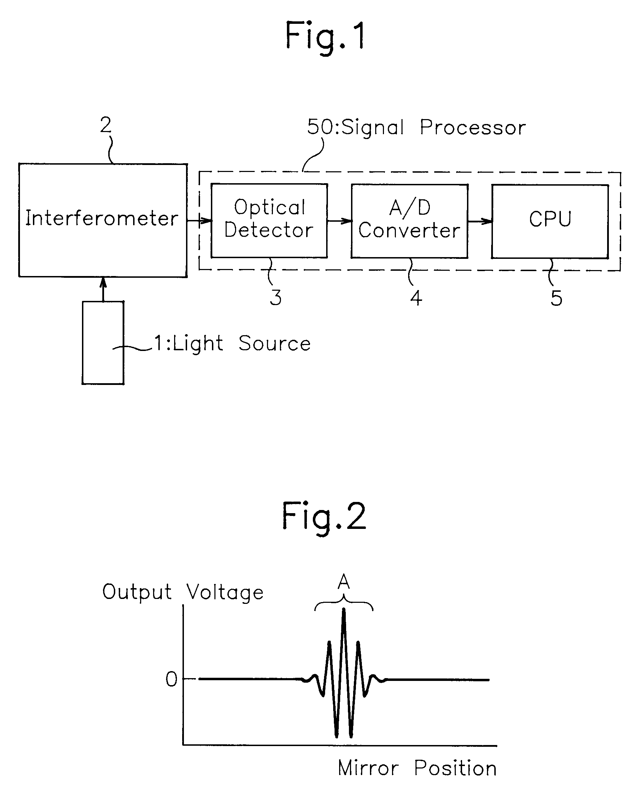

Figure 1 shows a block diagram which presents an example of such a Fourier transform spectrometer. In Figure 1, the number 1 indicates the light source that emits the light to be measured, number 2 the interferometer, number 3 the optical detector, number 4 the A/D converter and number 5 the means of computation control, e.g., a central processing unit (CPU). Numbers 3, 4 and 5 also construct a signal processor 50.

The output light of light source 1 is incident to interferometer 2, and the interference light, the output light of interferometer 2, is incident to optical detector 3. The (electrical) output of optical detector 3 is connected to A/D converter 4 whose output is in turn connected to CPU 5.

Here, operation of this example shown in Figure 1 will be described. The output light of light source 1, the light to be measured, changes to interference light in interferometer 2 and is detected with optical detector 3. The interference light detected with optical detector 3 is converted to digital signals using A/D converter 4 and this gives an interferogram. Finally, a spectrum is obtained through Fourier computation processing based on this interferogram in CPU 5.

Figure 2 shows a characteristic curve diagram which indicates an example of an interferogram obtained in the manner described above. The interferogram has such a feature as there is a steep peak called a center burst shown as "A" at the center part of the interferogram and in other parts, the signal levels of the output voltage are approximately zero.

However, since the full span of A/D converter 4 is set not to saturate the above-described burst, the quantified voltages contains the high-level noise of A/D converter 4. these known Fourier transform spectrometers include a problem that, since the full span of A/D converter 4 is set not to saturate the above-described burst, a high S/N Fourier transform spectrometer cannot be realized due to the fact that quantized voltages cannot but increase and measurement cannot but be made containing the high-level noise of A/D converter 4.

### SUMMARY OF THE INVENTION

The purpose of the present invention is to realize a high S/N Fourier transform spectrometer by reducing A/D converter noise.

### BRIEF DESCRIPTION OF THE DRAWINGS

Figure 1 is a block diagram which shows an example of a known Fourier transform spectrometer configuration.

Figure 2 is a characteristic curve diagram which shows an example of an interferogram.

Figure 3 is a block diagram which indicates an example of the first embodiment of a Fourier transform spectrometer configuration according to the present invention.

Figure 4 is a timing diagram that shows the production of a high S/N interferogram.

Figure 5 is a block diagram for calculating the noise in the A/D converter.

Figure 6 is a characteristics diagram showing calculated and experimented characteristic curves.

Figure 7 is a characteristics diagram which illustrates data synthesis if a phase difference exists.

Figure 8 shows an example of the spectrum.

Figure 9 is a block diagram that indicates the second embodiment of a Fourier transform spectrometer configuration according to the invention.

Figure 10 is a signal waveform diagram that illustrates data synthesis.

Figure 11 is a block diagram that indicates the third embodiment of a Fourier transform spectrometer configuration according to the invention.

Figure 12 is a block diagram that indicates the fourth embodiment of a Fourier transform spectrometer configuration according to the invention.

Figure 13 is a characteristics diagram which shows improvement of the S/N ratio using the gain as a parameter.

Figure 14 is a flow chart to show an example of gain optimization procedures.

### DETAILED DESCRIPTION OF THE PREFERRED EMBODIMENTS

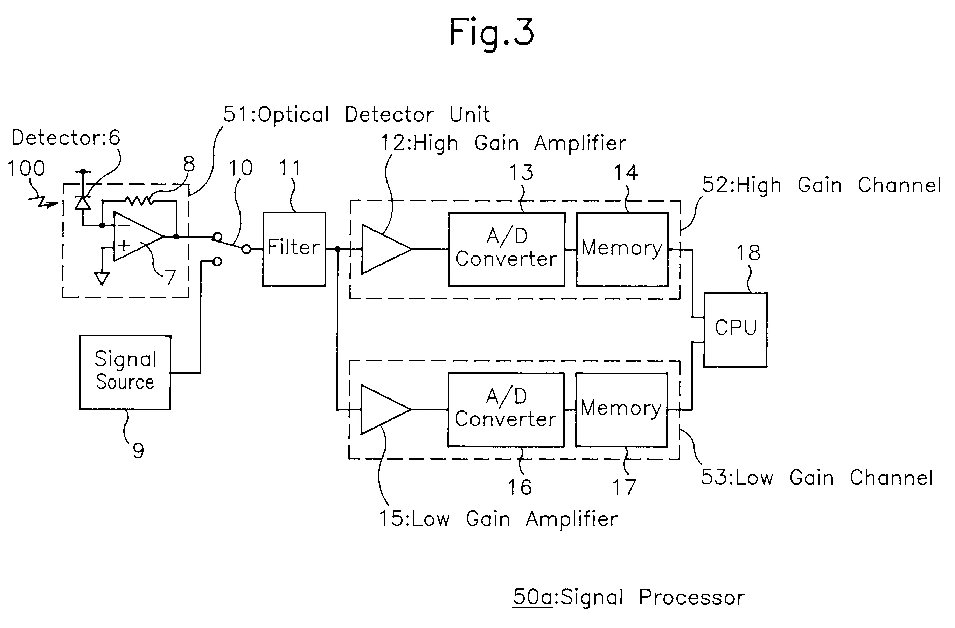

The present invention will be described in detail using the drawings in the following. Figure 3 is a block diagram which indicates the first embodiment of a Fourier transform spectrometer configuration according to the invention. However, since the configuration of the optical system is the same as for existing spectrometers, its description is omitted and only the portion equivalent to signal-processing means 50 is described.

In Figure 3, the number 6 shows a light detector, such as a photo-diode, number 7 indicates an operational amplifier, number 8 a resistor, number 9 a reference signal source to generate sine, rectangular, and triangular waves, number 10 a switch circuit, number 11 a filter which attenuates signals of higher frequencies, 1/2 or more of the sampling frequency, number 12 a high-gain amplifier for which the gain is set so that the center burst portion is saturated, numbers 13 and 16 A/D converters, numbers 14 and 17 data memories, number 15 a low-gain amplifier for which the gain is set so that the center burst portion is not saturated, number 18 a CPU, and number 100 the interference light from an interferometer not shown in the figure.

In addition, numbers 6, 7 and 8 configure optical detector unit 51, numbers 12 to 14 high-gain channel 52, numbers 15 to 17 low-gain channel 53, and numbers 6 to 18 configure signal processor 50a respectively.

Interference light 100 is incident to detector 6 whose anode is connected to the inverted input terminal of operational amplifier 7 and to one terminal of resistor 8. The cathode of detector 6 is connected to the positive pole of the power supply.

The non-inverted input terminal of operational amplifier 7 is grounded and the output of operational amplifier 7 is connected to the other terminal of resistor 8 and one input terminal of switch circuit 10. In addition, the output of reference signal source 9 is connected to the other input terminal of switch circuit 10.

The output terminal of switch circuit 10 is connected to high-gain amplifier 12 and low-gain amplifier 15 via filter 11, and the outputs of high-gain and low-gain amplifiers 12 and 15 are connected to A/D converters 13 and 16 respectively.

The outputs of A/D converters 13 and 16 are connected to data memories 14 and 17 respectively, and the outputs of data memories 14 and 17 are both connected to CPU 18.

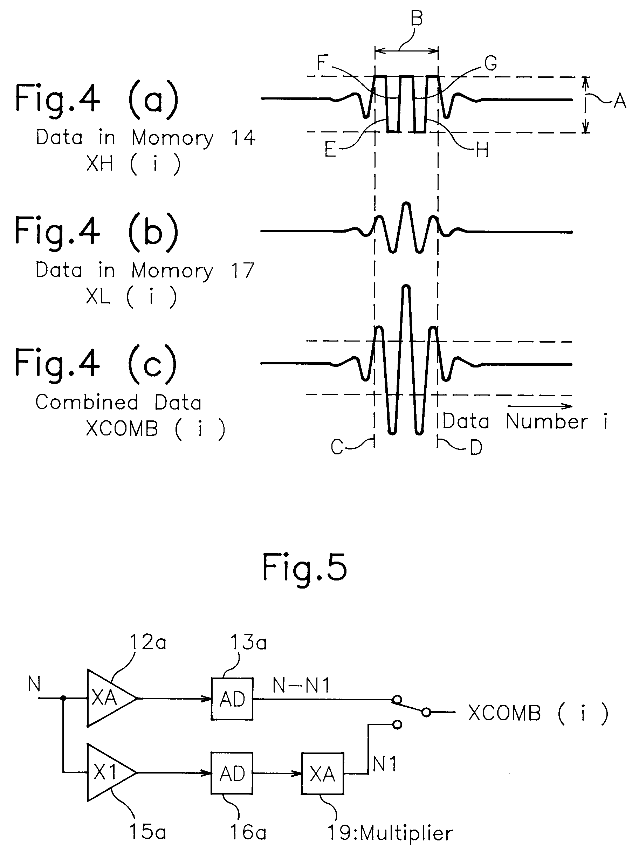

The operation of an embodiment of the invention shown in Figure 3 is explained using Figure 4. Figure 4 is a timing diagram that shows the production of a high S/N interferogram.

First, reference signal source 9 is selected with switch circuit 10 and the switch circuit output is input to the high-gain and low-gain amplifiers 12 and 15 respectively via filter 11. The outputs of these amplifiers are converted to digital signals with A/D converters 13 and 16 respectively and then stored in data memories 14 and 17 respectively.

CPU 18 conveniently changes reference signal source 9, fetches data, and calculates the correlation equation between high-gain channel 52 and low-gain channel 53. That is, if it is assumed that data i stored in data memory 14 is "XH(i)" and data i stored in data memory 17 is "XL(i)," CPU 18 calculates coefficients "A" and "B" so that the following equation holds:$\text{XH(i) = A*XL(i) + B}$

However, this process may be done only once at initialization or may be implemented at any time as necessary.
Next, optical detector unit 51 is selected with switch circuit 10, the output signal of optical detector unit 51 is input to high-gain and low-gain amplifiers 12 and 15 via filter 11, and stored in data memories 14 and 17 after being converted to digital signals using A/D converters 13 and 16.

Since the gain of high-gain amplifier 12 is set so that it saturates in the center burst portion, a waveform as shown in Figure 4 (a) is stored in data memory 14. For such a waveform, the part of the waveform exceeding "A" equivalent to the full span of A/D converter 13 shown in Figure 4 saturates, causing the saturated portion "B" shown in Figure 4, while, since the gain of low-gain amplifier 15 is set so that no saturation occurs in the center burst portion, the waveform shown in Figure 4 (b) is stored in data memory 17. In other words, the saturated portion as shown by "B" in Figure 4 is acquired completely by data memmory 17.

CPU 18 examines the data stored in data memory 14, detects the start and end points, "C" and "D," of the saturated portion "B," and synthesizes a waveform using the data stored in data memory 14 for the portion other than the saturated portion "B" and using the data stored in data memory 17 after converting the data with the correlation equation (1) determined previously for the saturated portion "B."

In other words, let the synthesized data as described above be "X COMB(i)" and the points "C" and "D" in Figure 4 be "ia" and "ib" and the number of data be "0 to N," then the following equations hold:$\begin{matrix}\begin{matrix}\begin{matrix}\text{X COMB(i) = XH(i) i = 0 to ia}\end{matrix} \\ \begin{matrix}\text{X COMB(i) = A*XL(i) + B i = ia to ib}\end{matrix} \\ \begin{matrix}\text{X COMB(i) = XH(i) i = ib to N}\end{matrix}\end{matrix}\end{matrix}$

As a result, an interferogram becomes a waveform which does not saturate in the center burst portion by detecting minute signals near zero with A/D converter 13, detecting the center burst portion in an unsaturated status using A/D converter 15, and synthesizing both signal portions.

That is, the apparent input range is widened and noise in the A/D converters is reduced. This can provide a high S/N ratio Fourier transform spectrometer.

The reduction of noise in the A/D converter is further described. Figure 5 is a block diagram in which high-gain and low-gain channels 52 and 53 are rewritten for noise calculation in the A/D converters. In Figure 5, numeral 12a shows an amplifier of "gain A", numbers 13a and 16a show A/D converters, number 15a an amplifier of "gain 1" and number 19 is a multiplier of "gain A".

If it is assumed that the noise in A/D converters 13a and 16a is "σ", the total number of data is "0 to N" and the number of data on the low-gain channel 53 side used for the above synthesis is "N1", noise level "Noise" in the existing spectrometers is expressed as${\text{Noise = {(N)}}^{\text{½}} \text{*σ}}$ and since the full span of the A/D converter is "1,"${\text{S/N = FullSpan/Noise = 1/{(N)}}^{\text{½}} \text{*σ}}$ while the noise level in the system of the present invention "Noise_{α}" is expressed as${\text{Noise}}_{\text{α}} {\text{= {N1*A}}^{\text{2}} {\text{+ (N - N1)}}}^{\text{½}} \text{*σ}$ In this case, considering that the full span of the A/D converter is multiplied by "A," the S/N ratio is as follows:${\text{S/N = FullSpan/Noise}}_{\text{α}} {\text{= A/{N1*A}}^{\text{2}} {\text{+ (N - N1)}}}^{\text{½}} \text{*σ}$

Consequently, improvement in the S/N ratio in the system of the present invention can be obtained by dividing equation (8) by equation (6). That is,${\text{[A/{N1*A}}^{\text{2}} {\text{+ (N - N1)}}}^{\text{½}} {\text{*σ] / [1/{(N)}}^{\text{½}} {\text{*σ}] = A*(N)}}^{\text{½}} {\text{/{N + N1*(A}}^{\text{2}} {\text{- 1)}}}^{\text{½}} {\text{= A/{1 + (N1/N)*(A}}^{\text{2}} {\text{- 1)}}}^{\text{½}}$

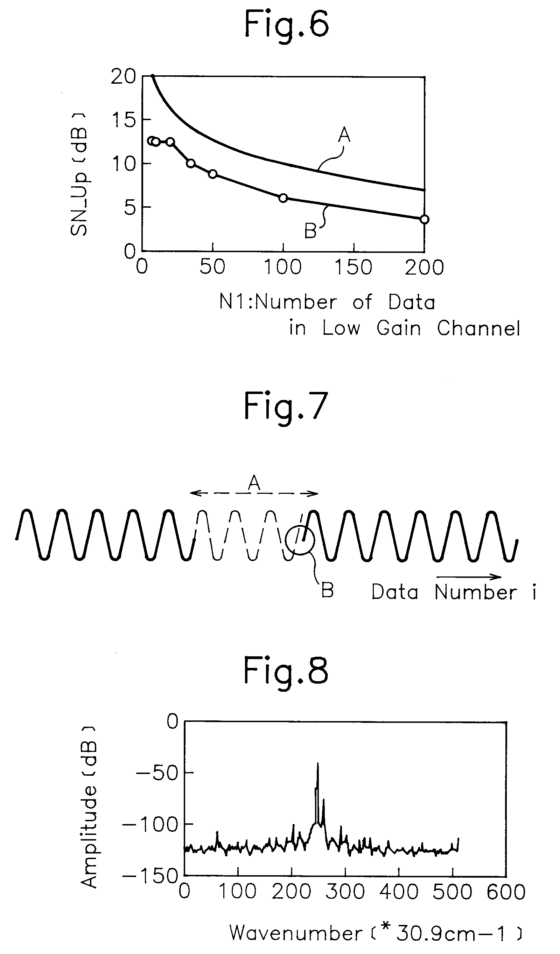

Figure 6 shows a characteristics diagram which indicates the improvement in the S/N ratio through a calculation using equation (9) and experimental values for the embodiment. In Figure 6, "A" shows the calculated values and "B" the experimental values respectively.

In addition, the correlation equation is determined from the gain characteristics between the two processing channels in the embodiment shown in Figure 3. However, if the waveform phase between the two channels is different, a problem may occur. Figure 7 is a characteristics diagram to show the data synthesis in the case where a phase difference exists and Figure 8 shows an example of the spectrum.

When the data in the low-gain channel is substituted for the portion "A" in Figure 7, which is the data of the high-gain channel, if a phase difference exists as indicated by "B" in Figure 7, the spectrum determined by Fourier transform processing of the above data is as shown in Figure 8.

As is apparent from Figure 8, a side lobe is produced around the center peak signal of wave number 250, the input signal, causing an error in the spectrum intensity due to the influence of the phase difference at the substituted part.

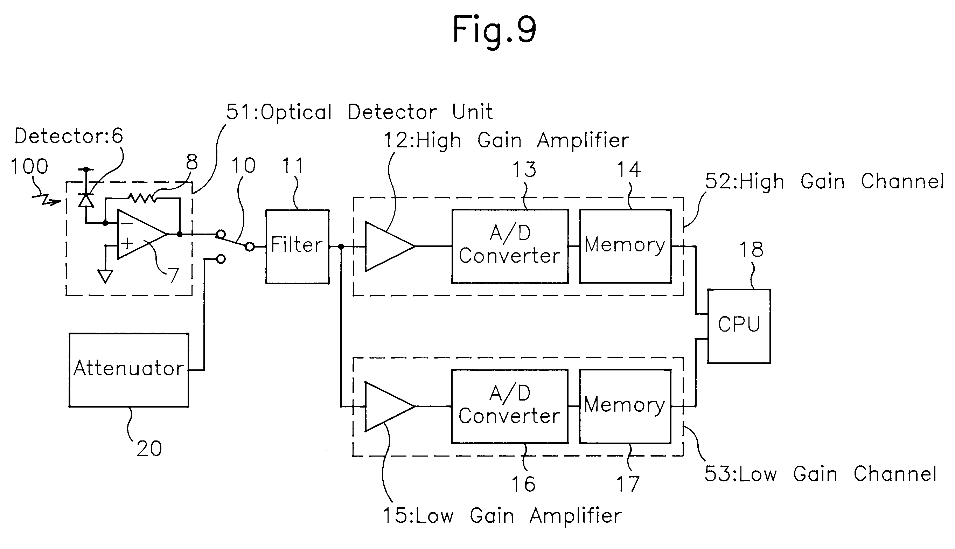

Figure 9 is a block diagram that indicates the second embodiment of a Fourier transform spectrometer configuration according to the invention. However, for numbers 6 to 8, 10 to 18, 51, 52, 53 and 100, the same symbols as in Figure 3 are given. Number 20 in Figure 9 shows an attenuator.

Connections are also basically the same, the different points being that the output of optical detector unit 51 is connected to attenuator 20, and the output of attenuator 20 is connected to the other input terminal of switch circuit 10.

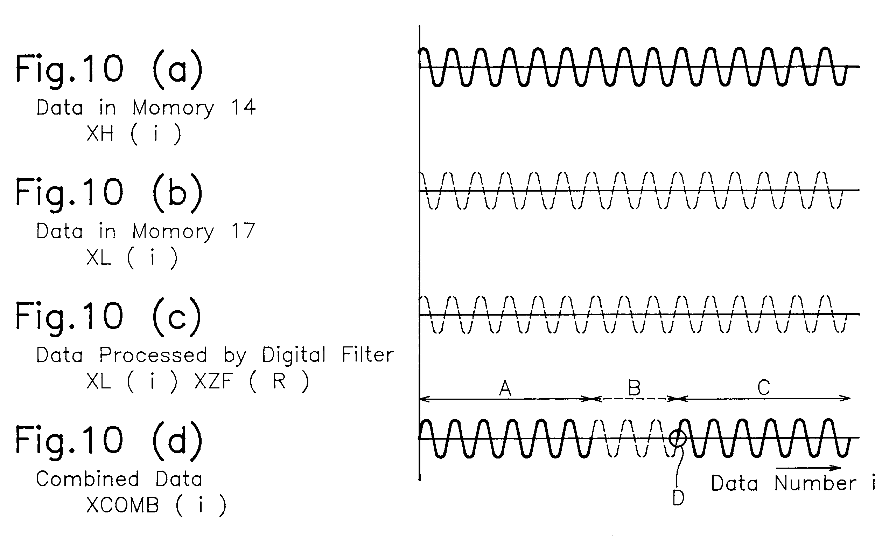

Operation of the second embodiment of the invention shown in Figure 9 is described using Figure 10. Figure 10 is a signal waveform diagram that illustrates data synthesis. First, attenuator 20 is selected with switch circuit 10, whose output signal is input to high-gain and low-gain amplifiers 12 and 15 respectively via filter 11 and stored in data memories 14 and 17 respectively after being converted into digital signals with A/D converters 13 and 16.

CPU 18 determines the transfer function by implementing Fourier transform processing on the data stored in data memories 14 and 17. That is, similar to the explanation above, let the data i stored in data memory 14 be "XH(i)", the data i stored in data memory 17 be "XL(i)", and the results of Fourier transform processing on these data be "YH(k)" and "YL(k)" respectively. Then, the transfer function "Z(k)" is expressed as follows:$\text{Z(k) = YH(k)/YL(k)}$

Second, CPU 18 determines a digital filter ZF(j) to realize the transfer function of equation (10). However, this process may be performed only once at initialization or may be implemented at any time as necessary.

Third, CPU 18 selects optical detector unit 51 with switch circuit 10, inputs the output signal of optical detector unit 51 to high-gain and low-gain amplifiers 12 and 15 via filter 11, and stores the output signals of these amplifiers in data memories 14 and 17 after converting them into digital signals with A/D converters 13 and 16 respectively.

In this case, a waveform as shown in Figure 10 (a) is stored in data memory 14 and a waveform as shown in Figure 10 (b) is stored in data memory 17. However, a phase difference exists between both waveforms as shown in Figure 10.

Fourth, CPU 18 applies the above-determined digital filter ZF(j) to the waveform shown in Figure (b) to obtain the data shown in Figure (c). This process eliminates the phase difference between both waveforms shown in Figure 10 (a) and (c).

CPU 18 further substitutes the data as mentioned in the explanation of the first embodiment of the invention. That is, in Figure 10 (d), data in Figure 10 (a) are used for portions "A" and "C" and data in Figure 10 (c) are used for portion "B".

As a result, processing the phase of data for a low-gain channel with the digital filter eliminates the phase difference between both channels at the substituted portion "B," does not cause a side lobe, and so no error occurs in the spectrum intensity.

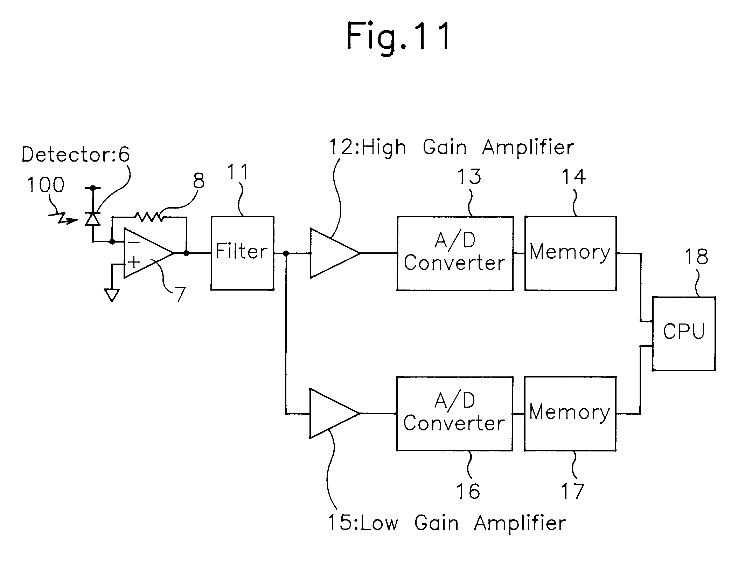

Figure 11 is a block diagram that indicates the third embodiment of the Fourier transform spectrometer configuration according to the invention. However, for numbers 6 to 8, 11 to 18, and 100, the same symbols as in Figure 3 are given. In addition, since connections are the same as Figure 3 except for removing switch circuit 10, their explanation is omitted.

Here, operation of the third embodiment of the invention shown in Figure 11 is described. Its basic operation is identical to that of the first embodiment shown in Figure 3 but the method to determine the correlation equation is different. In other words, a measured signal is directly fed to high-gain amplifier 12 and low-gain amplifier 15 via filter 11 and their outputs are stored in data memories 14 and 17 after being converted to digital signals with A/D converters 13 and 16 respectively.

CPU 18 calculates the equation for correlation between high-gain amplifier 12 and low-gain amplifier 15 as described before based on unsaturated data within the data stored in data memories 14 and 17.

As a result, the electric circuit can be simplified because standard signal source 9 and switch 10 become unnecessary, different from the first embodiment.

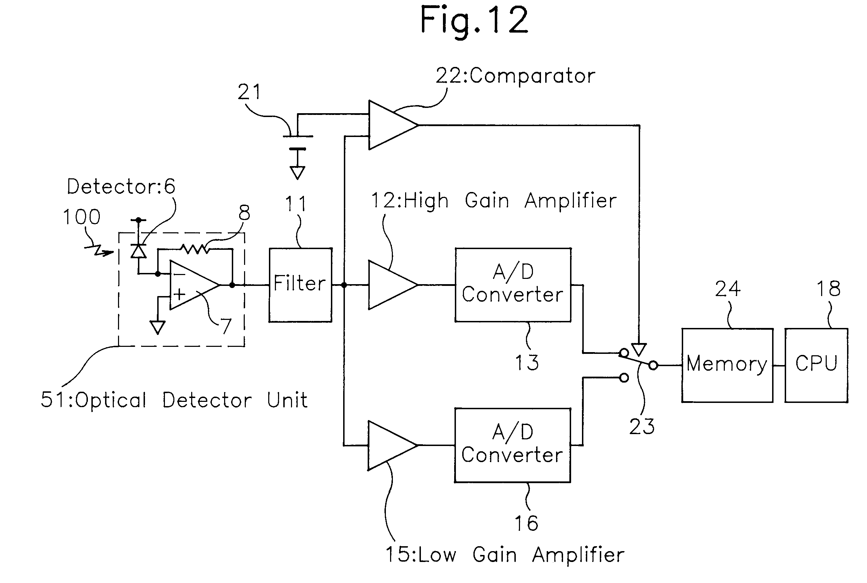

Further, Figure 12 is a block diagram that indicates the fourth embodiment of the Fourier transform spectrometer configuration according to the invention. However, for numbers 6 to 8, 11 to 13, 15, 16, 18, 51 and 100, the same symbols as in Figure 3 are given.

In Figure 12, numbers 21, 22, 23 and 24 show a reference voltage, a comparator, a switch circuit and a data memory respectively. The output of optical detector unit 51 is connected to high-gain and low-gain amplifiers 12 and 15 and also to one input terminal of comparator 22 respectively. Further, one terminal of reference voltage 21 is connected to the other input terminal of comparator 22 while the other terminal of reference voltage 21 is grounded.

The outputs of high-gain and low-gain amplifiers 12 and 15 are connected to A/D converters 13 and 16 respectively and the outputs of A/D converters 13 and 16 are connected to two input terminals of switch circuit 23 respectively.

The output terminal of switch circuit 23 is connected to data memory 24 and the output of data memory 24 is connected to CPU 18.

In the fourth embodiment shown in Figure 12, the number of data memories can be reduced to one from two by selecting either the output of A/D converter 13 or the output of A/D converter 16 through the control of switch circuit 23 with the output of comparator 22. In addition, processing at a higher speed becomes possible because the data transfer is halved.

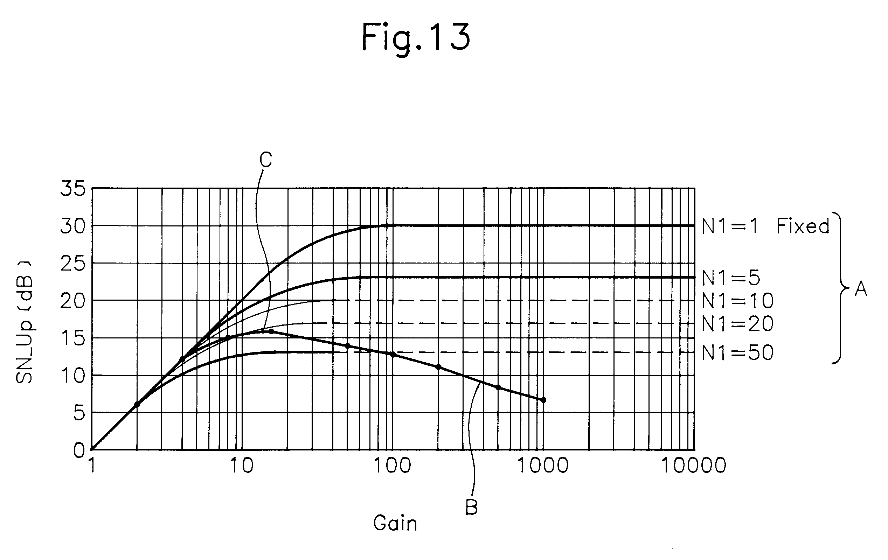

Figure 13 is a characteristics diagram which shows the improvement in the S/N ratio using the gain as a parameter for equation (9). The curves "A" in Figure 13 indicate the improvement in the S/N ratio if the number of data "N1" on the low-gain channel 53 side used for the previously described synthesis is fixed to 1, 5, 10, 20, or 50. In this case, the S/N ratio improves as the gain increases but after the gain reaches a certain value, the improvement is saturated.

However, since threshold levels vary as the gain actually changes, the improvement in the S/N ratio presents a curve as shown by "B" in Figure 13. Accordingly, the maximum point appears on the curve shown by "C" in Figure 13, and, thus, optimization can be intended by setting the gain to this maximum value.

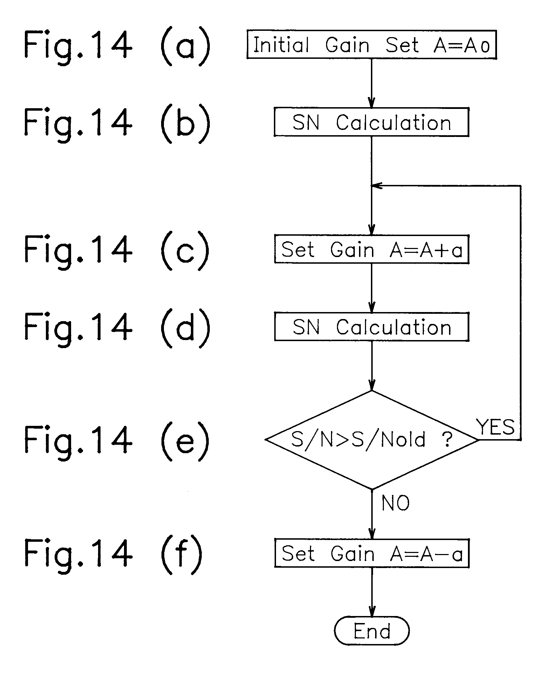

For example, optimization can be performed by the following technique. Figure 14 is a flow chart showing an example of gain optimization procedures. In Figure 14 (a), the initial gain "A0" is set and in Figure 14 (b), the S/N ratio is calculated.

Next, the gain is increased by "a" as shown in Figure 14 (c) and further the S/N ratio is calculated in Figure 14 (d).

If, in Figure 14 (e), the new S/N ratio is compared with "S/Nold" calculated in the preceding step and the new ratio is larger than S/Nold, steps (c) and (d) should be repeated. Also, if the new S/N ratio is smaller than S/Nold, the gain is decreased by "a" as shown in Figure 14 (f) to return it to the maximum value.

As a result, the gain of high-gain amplifier 12 can be optimized by maximizing the S/N ratio changing the gain of high-gain amplifier 12. However, this process may be done once at initialization or may be done at any time as necessary.

In addition, in the description of the embodiments of the invention, although the entire portion of "B" in Figure 4 is substituted using the output data of A/D converter 16, substitution is not limited to this procedure but data may be substituted by delimiting portion "B" into several parts.

For example, since parts "E," "F," "G," and "H" shown in Figure 4 are not actually saturated, if substitution is not carried out at these parts, the number of data "N1" in the previously derived equation (9) is reduced and this improves the S/N ratio.

Also, in the description of the embodiments of the invention, the two channels 52 and 53 with different gains are used. However, the channels are, of course, not limited to two but more than two processing channels can be adopted to improve the S/N ratio.

Further, the threshold value for data substitution may be automatically changed through the learning function using the actually measured data in advance.

## Claims

1. A Fourier transform spectrometer to determine a measured light spectrum by measuring the interference light of a measured light and by implementing a Fourier transform on the measured result by a means of a computation control, provided with
an optical detector unit to receive the said interference light;
low-gain and high-gain channels to convert and retain the output of said optical detector unit; and
a means of computation control (CPU) to determine the equation for correlation between the said low-gain channel and the said high-gain channel and to substitute the output of the low-gain channel converted with the said correlation equation for the saturated portion of the output of the high-gain channel.

2. A Fourier transform spectrometer in accordance with claim 1, wherein the transfer function between the said high-gain channel and the said low-gain channel is determined, and the phase of the low-gain channel output is adjusted based on the said transfer function.

3. A Fourier transform spectrometer in accordance with claim 1, wherein the equation for correlation between the said low-gain channel and the said high-gain channel is determined at any time.

4. A Fourier transform spectrometer in accordance with claim 2, wherein the said transfer function between the said low-gain channel and the said high-gain channel is determined at any time.

5. A Fourier transform spectrometer in accordance with any of the claims from 1 to 4, wherein the gain of the said high-gain channel is intended to be optimized so that the value of the S/N ratio reaches its maximum.
